# EUROPÄISCHE PATENTANMELDUNG

(11) **EP 4 663 971 A1**
(43) Veröffentlichungstag der Anmeldung: **17.12.2025**
(21) Anmeldenummer: 25181821.7
(22) Anmeldetag: 10.06.2025
(51) Int. Cl.: F16F 1/38

(54) **ELASTOMER-METALL-LAGER**

(30) Priorität: 12.06.2024 DE 102024116494
(71) Anmelder: Jörn GmbH, 71336 Waiblingen (DE)
(72) Erfinder: Boegler, Dorothee, 71409 Schwaikheim (DE)
(74) Vertreter: Liebl, Thomas

(57) **Zusammenfassung**

Die Erfindung betrifft ein Elastomer-Metall-Lager (2) zur Verbindung und Kraftübertragung zwischen zwei Bauteilen, mit wenigstens einem verformungssteifen Metall-Lagerteil (1) zur Verbindung mit einem der Bauteile, und mit einer am Metall-Lagerteil (1) angehafteten Elastomerschicht (11) und/oder von Elastomerelementen und mit wenigstens einem am Elastomer-Metall-Lager (1) angebrachten Sensor (3) zur Erfassung und Messung einer physikalischen Größe. Erfindungsgemäß weist das Metall-Lagerteil (1) an der der Elastomerschicht (11) zugewandten Seite eine der Größe des Sensors (3) angepasste Sensor-Aussparung (5) auf, in der der Sensor (3) vertieft einliegt. Von der Sensor-Aussparung (5) ausgehend weist das Metall-Lagerteil (1) zudem eine Kabelführungs-Aussparung (6) auf, in der ein mit dem Sensor (3) verbundenes Sensor-Kabel (4) vertieft einliegt, und der Sensor (3) ist in der Sensor-Aussparung (5) und das Sensor-Kabel (4) in der Kabelführungs-Aussparung (6) durch Füllung der Aussparungen (5, 6) mit einem temperaturbeständigen, aushärtenden Klebstoff (10) eingebettet und überdeckt.

## Beschreibung

Die Erfindung betrifft ein Elastomer-Metall-Lager zur Verbindung und Kraftübertragung zwischen zwei Bauteilen und ein Verfahren zu seiner Herstellung.

Die verwendeten Begriffe "Elastomer-Metall-Lager" und "Gummi-Metall-Lager" sind, wie in Fachkreisen üblich, allgemein zu verstehen und weit auszulegen, wobei der Begriff "Metall" stellvertretend für ein verformungssteifes Lagerbauteil steht, das nicht nur aus einem Metallmaterial, sondern insbesondere auch durch ein verformungssteifes Kunststoffmaterial gebildet sein kann, während der Begriff "Gummi" als Synonym für jedwedes geeignete, elastische Eigenschaften aufweisende Elastomermaterial steht.

Die mit dem Elastomer-Metall-Lager kraftübertragend verbundenen Bauteile sind Bestandteil von Geräten oder Anlagen, die betriebsbedingt externen Kräften ausgesetzt sind und/oder selbst Kräfte erzeugen, die zu Verformungen im Elastomer-Metall-Lager führen.

Elastomer-Metall-Lager sind in unterschiedlichen Ausführungsformen, beispielsweise als Buchsen, Kugelgelenke und Druckfedern, für eine Vielzahl von Lageraufgaben allgemein bekannt. Zur kraftübertragenden Verbindung zwischen zwei Bauteilen weisen bekannte Elastomer-Metall-Lager allgemein wenigstens ein verformungssteifes Metall-Lagerteil auf zur Verbindung mit einem der zwei Bauteile, auf dem eine Elastomerschicht und/oder Elastomerelemente angehaftet sind. In der Funktionsstellung kann ein solches Elastomer-Metall-Lager unter Vorspannung in ein Aufnahmeauge des zweiten Bauteils eingepresst oder zwischen zwei Bauteile eingespannt werden. Bei anderen bekannten Lagerausführungen sind zwei verformungssteife, beabstandete Metall-Lagerteile verwendet, jeweils zur Verbindung mit den zwei Bauteilen, zwischen denen eine Elastomerschicht und/oder Elastomerelemente angehaftet sind. Je nach Ausführungsform können diese verformungssteifen Metall-Lagerteile ringförmige Buchsenteile, plane Plattenteile oder bogenförmige Plattenteile sein.

In vielen technischen Anwendungen ist es erforderlich, den Zustand von Elastomer-Metall-Lagern zu überwachen und Rückschlüsse auf die Funktionalität und Belastung anderer Bauteile zu ziehen. Im Bereich der Entwicklung geht es vor allem darum, die tatsächlich auftretenden Belastungen zu erfassen, um die Konstruktion gezielt daraufhin auszulegen. In der Serienanwendung geht es darum, Kräfte zu erfassen, um zum Beispiel die Zuladung eines Fahrzeugs kontrollieren zu können.

Der übliche aktuelle Stand der Technik umfasst den Einsatz von externen Sensoren, die an den Bauteilen angebracht sind und über Kabel mit den Messgeräten verbunden sind. Dies führt jedoch zu Problemen wie erhöhtem Platzbedarf und unzureichendem Schutz der Sensoren vor Umgebungseinflüssen. In vielen Fällen ist jedoch aktuell noch keine Sensorik angebracht.

Zudem ist konkret ein Elastomer-Metall-Lager mit einem Sensor und einer nachgeschalteten Mess- und Auswerteeinheit als Bestandteil eines Geräts aus EP 3 144 658 B1 bekannt. Hier wird mit dem Sensor eine Verformung des Elastomermaterials im Elastomer-Metall-Lager erfasst und Verformungsmesswerte werden als Kenngröße für eine aktuelle Bauteilsteifigkeit in der Auswerteeinheit über eine relativ lange Nutzungsdauer gespeichert. Wenn im Verlauf einer langen Nutzungsdauer die Verformungsmesswerte bei vergleichsweise gleichen Belastungen ansteigen bzw. die Bauteilsteifigkeit abnimmt, wird dadurch ein Verschleiß mit einer begrenzten Restnutzungsdauer des Elastomer-Metall-Lagers festgestellt. Der am Elastomer-Metall-Lager angebrachte Sensor zur Erfassung der Bauteilverformung oder einer Erfassung einer davon abgeleiteten physikalischen Größe ist weder spezifiziert noch ist dessen Anordnung, insbesondere für eine funktionale, kosteneffiziente Montage und Herstellung des Elastomer-Metall-Lagers, angegeben. In Verbindung mit einem Vulkanisierprozess zur Anbringung von Elastomermaterial ist jedoch wegen der hohen Drücke und hohen Temperaturen eine lagerichtige Position eines Sensors ohne funktionelle Beeinträchtigung des Sensors und/oder des gesamten Elastomer-Metall-Lagers eine komplexe Aufgabe.

Aufgabe der Erfindung ist es daher, ein Elastomer-Metall-Lager mit wenigstens einem Sensor zur kraftübertragenden Verbindung zwischen zwei Bauteilen vorzuschlagen, bei dem eine Integration und Anbringung des Sensors einfach, kosteneffizient und ohne Beeinträchtigung der Funktionalität mit vorgegebener Lagegenauigkeit des Sensors durchführbar ist.

Diese Aufgabe wird hinsichtlich des Elastomer-Metall-Lagers mit den Merkmalen des Anspruchs 1 und hinsichtlich des Verfahrens mit den Merkmalen des Anspruchs 14 gelöst.

Gemäß Anspruch 1 weist das Elastomer-Metall-Lager wenigstens ein verformungssteifes Metall-Lagerteil zur Verbindung mit einem der Bauteile auf, an dem eine Elastomerschicht und/oder Elastomerelemente angehaftet sind. Das Metall-Lagerteil weist an der der Elastomerschicht zugewandten Seite eine der Größe des Sensors angepasste Sensor-Aussparung auf, in der der Sensor vertieft einliegt. Zudem ist eine von der Sensor-Aussparung ausgehende Kabelführungs-Aussparung vorgesehen, in der ein mit dem Sensor verbundenes Sensor-Kabel vertieft einliegt. Der Sensor in der Sensor-Aussparung und das Sensor-Kabel in der Kabelführungs-Aussparung sind durch Füllung der Aussparungen mit einem temperaturbeständigen, aushärtenden Klebstoff eingebettet und überdeckt.

Damit sind beim erfindungsgemäßen Elastomer-Metall-Lager vorteilhaft der Sensor und das daran angeschlossene Sensorkabel in das Lager integriert und bilden ein Bauteil mit integrierter Sensorik, wobei der Sensor und das Sensorkabel vor Umgebungseinflüssen geschützt sind.

Für einen einfachen Anschluss ist das Sensor-Kabel weiter in eine Rand-Aussparung am Ende der Kabelführungs-Aussparung am Lagerteilrand geführt.

Vorteilhaft können in einem Vormontageschritt der Sensor in der Sensor-Aussparung und/oder das Sensor-Kabel in der Kabelführungs-Aussparung vor der Füllung mit dem temperaturbeständigen, aushärtenden Klebstoff lagegenau fixiert werden, insbesondere durch Kleben und/oder Schrauben. Damit ist eine Vorjustierung des Sensors und des Sensor-Kabels für eine anschließende einfache Füllung der Aussparungen mit Klebestoff durchführbar.

In einer besonders bevorzugten Ausführungsform wird als temperaturbeständiger, aushärtender Klebestoff ein sogenannter Flüssigmetall-Klebestoff verwendet. Im Handel befinden sich zahlreiche Produkte, die als Flüssigmetall bezeichnet werden, beispielsweise Petec-Flüssigmetall, Loctite 3450, Conrad Flüssigmetall. Dies sind meist Metall- oder Keramik-Dispersionen in Epoxidharz, die nach dem Aushärten metallähnliche Materialeigenschaften besitzen und zum Verkleben als Klebstoff benutzt werden. Solche Flüssigmetall-Klebstoffe sind erfindungsgemäß gegen die beim nachfolgenden Vulkanisationsprozess auftretenden hohen Temperaturen von bis zu 200°C und den hohen Vulkanisationsdrücken beständig und verschließen optimal die Oberfläche der Aussparungen des Metall-Lagerteils mit dem darunterliegenden Sensor und dem Sensorkabel. Durch die metallähnliche Charakteristik des Flüssigmetall-Klebstoffs nach der Aushärtung werden vorteilhaft die mechanischen Eigenschaften des vulkanisierten Elastomer-Metall-Lagers, insbesondere durch Haftungsfehler, nicht beeinflusst und der Sensor und/oder das Sensorkabel sind davor geschützt, von den hohen Gummieinspritzdrücken abgeschert zu werden

Die Sensor-Aussparung und die Kabelführungs-Aussparung werden vorteilhaft oberflächenbündig mit dem Klebstoff gefüllt, so dass die Form eines Metall-Lagerteils mit und ohne Sensorik nahezu gleich ist und damit praktisch keine Änderungen in der Lagerelastizität durch Anbringung der Sensorik damit verbunden sind.

Vorteilhaft können das Sensor-Kabel mit seinen Kabelenden beim Vulkanisationsprozess in der Rand-Aussparung aufgenommen sein, wodurch verhindert wird, dass die Kabelenden aus dem Vulkanisationswerkzeug hinausragen und dort gegebenenfalls Gummi ausläuft. Die Kabelenden in der Rand-Aussparung können auch weitere Montagearbeiten des Elastomer-Metall-Lagers vereinfachen, da damit gegebenenfalls Beschädigungen, wie Zerquetschen oder Abreißen des Sensor-Kabels verhindert werden kann.

In an sich bekannter Weise kann vor dem Vulkanisationsprozess auf das Metall-Lagerteil mit dem in Klebstoff eingebetteten Sensor und dem Sensor-Kabel ein Primer und ein Haftmittel aufgetragen werden. Für eine optimale Anhaftung des Elastomermaterials bei Verwendung von Flüssigmetall-Klebstoff sind auch an den dortigen Oberflächen gleiche Verhältnisse für Primer und Haftmittel wie an den übrigen Metalloberflächen gegeben.

Die so mit integrierter Sensorik präparierten Metall-Lagerteile können in gewohnter Weise mit Primer und Haftmittel vorbehandelt und anschließend vulkanisiert werden, ebenso wie Metall-Lagerteile einer gleichen Lagerausführung ohne Sensorik. Es können somit gleiche Vulkanisierwerkzeuge verwendet werden und teure Werkzeugkosten für Gleichteile mit und ohne Sensorik entfallen.

Für die Weiterleitung von Sensorsignalen können zur Kabelweiterführung in der Rand-Aussparung Lötstützpunkte angebracht werden oder eine Kabelverlängerung kann direkt durch Verbindungstechnik erfolgen.

In einer bevorzugten, vorteilhaften Konkretisierung und Weiterbildung ist der Sensor ein im Vergleich zum Metall-Lagerteil dünnwandiges flächiges, insbesondere rechteckiges Sensorelement, wobei die zugeordnete Sensoraussparung mit leichtem Übermaß der Sensorform angepasst ist.

Grundsätzlich können alle bekannten Sensoren zur Erfassung physikalischer Größen in der erfindungsgemäßen Anordnung verwendet werden, sofern sie herstellungsbedingten und/oder betriebsbedingten Umwelteinflüssen standhalten können. Besonders bevorzugt kann ein flächiger Drucksensor, insbesondere ein Folien-Sensor (FSR-Sensor) oder ein Dehnungs-Sensor, insbesondere Dehnungs-Messstreifen-Sensor (DMS-Sensor) verwendet werden. Je nach den Gegebenheiten und/oder der zu erfassenden physikalischen Größen können auch andere Sensoren, beispielsweise Temperatur-Sensoren, insbesondere Thermoelemente oder Widerstands-Temperatur-Sensoren, verwendet werden.

Vorstehend ist jeweils zur Verdeutlichung der erfindungsgemäßen Anordnung nur ein Sensor an einem Metall-Lagerteil des Elastomer-Metall-Lagers detailliert angegeben und beschrieben. An einem Metall-Lagerteil und gegebenenfalls auch an einem zweiten, gegenüberliegenden Metall-Lagerteil können ein oder mehrere Sensoren auch mit unterschiedlichen Sensoreigenschaften angebracht sein, so dass damit über eine Mehrzahl von Messergebnissen detaillierte Zustandsaussagen möglich sein können. Auch eine solche Anordnung mit mehreren Sensoren soll vom Schutzumfang umfasst sein.

Es ist allgemein bekannt, bei Elastomer-Metall-Lagern gegebenenfalls eine Vorspannung im Elastomer-Material einzubringen, insbesondere um das Elastomer-Material vor schädlichen Dehnungsbelastungen zu schützen. Auch beim erfindungsgemäßen Elastomer-Metall-Lager mit Sensorik kann in der Elastomerschicht bei der Herstellung oder in der betriebsmäßigen Einbausituation bei der Verbindung zwischen zwei Bauteilen eine Vorspannung aufgebaut sein.

In einer Weiterbildung zu einem Gesamtsystem sollen die in der betriebsmäßigen Einbausituation des Elastomer-Metall-Lagers ermittelten Messsignale eines oder mehrere Sensoren einer damit verbundenen Mess- und Auswerteeinheit zugeführt werden. Dort können in Verbindung mit Auswertungsprogrammen Überwachungen von Zuständen des Elastomer-Metall-Lagers und/oder angeschlossener Bauteile und/oder Funktionsanalysen von Geräten und Anlagen, in denen die Bauteile eingebaut sind, gegebenenfalls in Verbindung mit Regelungseingriffen durchgeführt werden.

Weiter wird ein Verfahren zur Herstellung eines vorstehend geschilderten Elastomer-Metall-Lagers beansprucht, wobei in einem ersten Verfahrensschritt im Metall-Lagerteil eine Sensor-Aussparung und eine davon ausgehende Kabelführungs-Aussparung angebracht wird, in denen jeweils der Sensor und das Sensor-Kabel vertieft eingelegt werden. In einem zweiten Verfahrensschritt werden die Aussparungen mit einem temperaturbeständigen, aushärtenden Klebstoff, insbesondere mit einem Flüssigmetall-Klebstoff, gefüllt, wodurch der Sensor und das Sensor-Kabel eingebettet und überdeckt werden. In einem anschließenden weiteren Verfahrensschritt nach Aushärtung des Klebstoffs wird in einem Vulkanisationsprozess Elastomermaterial als Elastomerschicht auf das Metall-Lagerteil aufgebracht.

Anhand einer Zeichnung wird beispielhaft eine Ausführungsform eines erfindungsgemäßen Elastomer-Metall-Lagerteils dargestellt.

Es zeigen:
- Fig. 1: eine perspektivische Darstellung eines Metall-Lagerteils als Rohrabschnitt und Bestandteil einer Elastomer-Metall-Lagerbuchse und darüber einen Sensor mit Sensor-Kabeln;
- Fig. 2: einen vergrößerten Ausschnitt im Bereich einer Sensor-Aussparung und einer Kabelführungs-Aussparung mit eingelegtem Sensor und Sensor-Kabel; und
- Fig. 3: eine Ansicht entsprechend Fig. 2 mit durch einen Flüssigmetallklebstoff flächenbündig gefüllten Aussparungen sowie eine strichliert angedeutete Elastomerschicht.

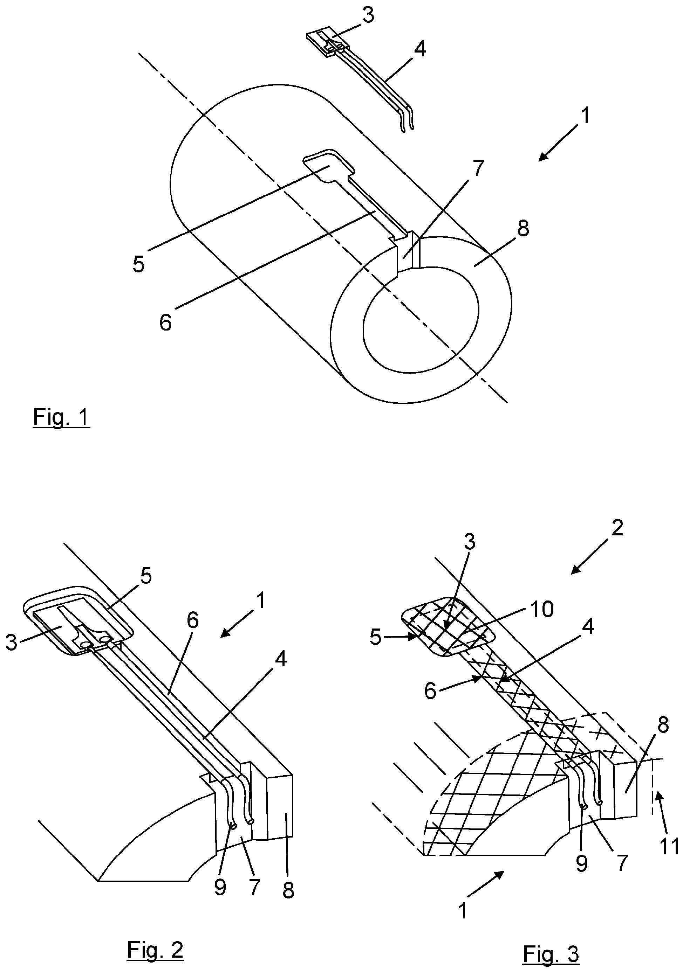

In Figur 1 ist ein Metall-Lagerteil 1 als Metallrohrabschnitt und radial innerer Bestandteil einer Elastomer-Metall-Lagerbuchse 2 dargestellt (Figur 3). Die Elastomer-Metall-Lagerbuchse 2 soll mit einer Sensorik bestehend aus einem dünnwandigen, flächigen, rechteckigen Sensor 3 mit angeschlossenen Sensorkabeln 4 ausgerüstet werden.

Dazu sind im Metall-Lagerteil 1 an der Außenseite eine an die Sensorform angepasste Sensor-Aussparung 5 und eine daran anschließende Kabelführungs-Aussparung 6 angebracht. Die Kabelführungs-Aussparung 6 endet in einer Rand-Aussparung 7 am stirnseitigen Lagerteilrand 8. Die Sensor-Aussparung 5 liegt ersichtlich versetzt zum Lagerteilrand 8 und die Kabelführungs-Aussparung 6 verläuft als schmälerer Kabelkanal bis zur Rand-Aussparung 7.

In Figur 2 ist der Bereich um die Sensor-Aussparung 5 und die Kabelführungs-Aussparung 6 von Figur 1 vergrößert dargestellt. In Figur 2 sind bereits der Sensor 3 mit dem angeschlossenen Sensorkabel 4 in die Sensor-Aussparung 5 und Kabelführungs-Aussparung 6 vertieft eingelegt, wobei Kabelenden 9 abknickend in der Rand-Aussparung 7 aufgenommen sind. Der Sensor 3 und das Sensorkabel 4 können in der in Figur 2 gezeigten Position durch Kleben und gegebenenfalls Schrauben fixiert werden.

Anschließend werden die Sensor-Aussparung 5 und die Kabel-Aussparung 6 mit dem darin vertieft liegenden Sensor 3 und Sensorkabel 4 mit Flüssigmetall-Klebstoff 10 oberflächenbündig befüllt, wie dies in Figur 3 dargestellt ist, wobei die Kabelenden 9 in der Randaussparung 7 für weitere Anschlüsse klebstofffrei einliegen. Nach dem Aushärten des Flüssigmetall-Klebstoffs 10 kann auf das Metall-Lagerteil 1 und die Klebstoffoberfläche Primer und Haftmittel aufgebracht werden zur Vorbereitung eines Vulkanisierungsprozesses in einem Vulkanisierwerkzeug. Im Vulkanisierungsprozess wird zur Ausbildung der Elastomer-Metall-Lagerbuchse 2 eine strichliert dargestellte Elastomerschicht 11 als Gummischicht auf dem Metall-Lagerteil 1 angehaftet.

### Bezugszeichenliste

- 1: Metall-Lagerteil
- 2: Elastomer-Metall-Lagerbuchse
- 3: Sensor
- 4: Sensor-Kabel
- 5: Sensor-Aussparung
- 6: Kabelführungs-Aussparung
- 7: Rand-Aussparung
- 8: Lagerteilrand
- 9: Kabelenden
- 10: Flüssigmetall-Klebstoff
- 11: Elastomerschicht

## Patentansprüche

1. Elastomer-Metall-Lager (2) zur Verbindung und Kraftübertragung zwischen zwei Bauteilen,
mit wenigstens einem verformungssteifen Metall-Lagerteil (1) zur Verbindung mit einem der Bauteile,
mit einer am Metall-Lagerteil (1) angehafteten Elastomerschicht (11) und/oder von Elastomerelementen und mit wenigstens einem am Elastomer-Metall-Lager (2) angebrachten Sensor (3) zur Erfassung und Messung einer physikalischen Größe,
**dadurch gekennzeichnet,**
**dass** das Metall-Lagerteil (1) zudem an der der Elastomerschicht (11) zugewandten Seite eine der Größe des Sensors (3) angepasste Sensor-Aussparung (5) aufweist, in der der Sensor (3) vertieft einliegt,
**dass** das Metall-Lagerteil (1) von der Sensor-Aussparung (5) ausgehend, eine Kabelführungs-Aussparung (6) aufweist, in der ein mit dem Sensor (3) verbundenes Sensor-Kabel (4) vertieft einliegt, und
**dass** der Sensor (3) in der Sensor-Aussparung (5) und das Sensor-Kabel (4) in der Kabelführungs-Aussparung (6) durch Füllung der Aussparungen (5, 6) mit einem temperaturbeständigen, aushärtenden Klebstoff (10) eingebettet und überdeckt sind.

2. Elastomer-Metall-Lager nach Anspruch 1, **dadurch gekennzeichnet, dass** das Sensor-Kabel (4) weiter in eine Rand-Aussparung (7) am Ende der Kabelführungs-Aussparung (6) am Lagerteilrand (8) geführt ist.

3. Elastomer-Metall-Lager nach Anspruch 1 oder Anspruch 2, **dadurch gekennzeichnet, dass** der Sensor (3) in der Sensor-Aussparung (5) und/oder das Sensor-Kabel (4) in der Kabelführungs-Aussparung (6) vor der Füllung mit dem temperaturbeständigen, aushärtenden Klebstoff (10) lagegenau fixiert sind, insbesondere durch Kleben und/oder Schrauben fixiert sind.

4. Elastomer-Metall-Lager nach einem der Ansprüche 1 bis 3, **dadurch gekennzeichnet, dass** der temperaturbeständige, aushärtende Klebstoff ein Flüssigmetall-Klebstoff (10) ist.

5. Elastomer-Metall-Lager nach einem der Ansprüche 1 bis 4, **dadurch gekennzeichnet, dass** die Sensor-Aussparung (5) und die Kabelführungs-Aussparung (6) oberflächenbündig mit dem Klebstoff (10) gefüllt sind.

6. Elastomer-Metall-Lager nach einem der Ansprüche 1 bis 5, **dadurch gekennzeichnet, dass** das Sensor-Kabel (4) mit Kabelenden (9) beim Vulkanisationsprozess zur Anbringung der Elastomerschicht (11) oder von Elastomerelementen in der Rand-Aussparung (7) aufgenommen ist.

7. Elastomer-Metall-Lager nach einem der Ansprüche 1 bis 6, **dadurch gekennzeichnet, dass** vor dem Vulkanisationsprozess auf das Metall-Lagerteil (1) mit dem in Klebstoff (10) eingebetteten Sensor (3) und dem Sensor-Kabel (4) ein Primer und ein Haftmittel aufgetragen sind.

8. Elastomer-Metall-Lager nach einem der Ansprüche 1 bis 7, **dadurch gekennzeichnet, dass** nach dem Vulkanisationsprozess zur Kabelweiterführung in der Rand-Aussparung (7) Lötstützpunkte angebracht sind oder dass eine Kabelverlängerung durch Verbindungstechnik direkt erfolgt.

9. Elastomer-Metall-Lager nach einem der Ansprüche 1 bis 8, **dadurch gekennzeichnet, dass** der Sensor (3) ein im Vergleich zum Metall-Lagerteil (1) dünnwandiges, flächiges, insbesondere rechteckiges Sensorelement ist.

10. Elastomer-Metall-Lager nach einem der Ansprüche 1 bis 9, **dadurch gekennzeichnet, dass** der wenigstens eine Sensor (3) ein Druck-Sensor, insbesondere ein Folien-Sensor (FSR-Sensor), oder ein Dehnungs-Sensor, insbesondere ein Dehnungs-Messstreifen-Sensor (DMS-Sensor) oder ein Temperatur-Senor, vorzugsweise ein Thermoelement oder Widerstands-Temperatur-Sensor ist.

11. Elastomer-Metall-Lager nach einem der Ansprüche 1 bis 10, **dadurch gekennzeichnet, dass** an einem Metall-Lagerteil (1) oder an mehreren Metall-Lagerteilen ein oder mehrere, gegebenenfalls unterschiedliche Sensoren (3) angebracht sind.

12. Elastomer-Metall-Lager nach einem der Ansprüche 1 bis 11, **dadurch gekennzeichnet, dass** in der Elastomerschicht (11) oder in den Elastomerelementen bei der Herstellung oder in der betriebsmäßigen Einbausituation bei der Verbindung von zwei Bauteilen eine Vorspannung aufgebaut ist.

13. Elastomer-Metall-Lager nach einem der Ansprüche 1 bis 12, **dadurch gekennzeichnet, dass** in der betriebsmäßigen Einbausituation des Elastomer-Metall-Lagers (2) die Messsignale des wenigstens einen oder mehrerer Sensoren (3) einer damit verbundenen Mess- oder Auswerteeinheit zugeführt werden, mit der in Auswertungsprogrammen Überwachungen von Zuständen des Elastomer-Metall-Lagers (2) und/oder angeschlossener Bauteile und/oder Funktionsanalysen von Geräten und Anlagen, in denen die Bauteile eingebaut sind, gegebenenfalls in Verbindung mit Regelungseingriffen durchführbar sind.

14. Verfahren zur Herstellung eines Elastomer-Metall-Lagers nach einem der Ansprüche 1 bis 13,
mit wenigstens einem Sensor (3) und mit einer an einem Metall-Lagerteil (1) angehafteten Elastomerschicht (11) und/oder Elastomerelementen,
**dadurch gekennzeichnet,**
**dass** das Metall-Lagerteil (1) an der der Elastomerschicht (11) zugewandten Seite eine der Größe des Sensors (3) angepasste Sensor-Aussparung (5) aufweist, in die der Sensor (3) vertieft eingelegt wird,
**dass** von der Sensor-Aussparung (5) ausgehend das Metall-Lagerteil (1) zudem eine Kabelführungs-Aussparung (6) aufweist, in die ein mit dem Sensor verbundenes Sensor-Kabel (4) vertieft eingelegt wird,
**dass** der Sensor (3) in der Sensor-Aussparung (5) und das Sensor-Kabel (4) in der Kabelführungs-Aussparung (6) durch Füllung der Aussparungen (5, 6) mit einem temperaturbeständigen aushärtenden Klebstoff (10) eingebettet und überdeckt wird, und
**dass** in einem anschließenden Vulkanisierungsprozess Elastomermaterial als Elastomerschicht (11) auf das Metall-Lagerteil (1) aufgebracht wird.
